# EUROPEAN PATENT APPLICATION

(11) **EP 3 318 618 A1**
(43) Date of publication of application: **09.05.2018**
(21) Application number: 16002335.4
(22) Date of filing: 03.11.2016
(51) Int. Cl.: C09K 21/02, E04B 1/94

(54) **FLAME-RETARDANT MEMBER, FLAME-RETARDANT COMPOSITION, AND FLAME-RETARDANT DISPERSION LIQUID**

(71) Applicant: Nitto Belgium NV, 3600 Genk (BE); NITTO DENKO CORPORATION, Ibaraki-shi, Osaka 567-8680 (JP)
(72) Inventor: Nakayama, Junichi, Ibaraki-shi, Osaka, 567-8680 (JP); Hirano, Keisuke, Ibaraki-shi, Osaka, 567-8680 (JP)
(74) Representative: Müller-Boré & Partner Patentanwälte PartG mbB

(57) **Abstract**

Provided is a flame-retardant member having a flame-retardant layer that has sufficient flame retardancy, has high transparency, and has high strength of its film surface. Also provided is a flame-retardant composition that forms such flame-retardant layer. Also provided is a flame-retardant dispersion liquid to be used in the preparation of such flame-retardant composition. The flame-retardant member includes: a flame-retardant layer; and a base material, in which: the flame-retardant layer has a haze of 35% or less; and a surface of the flame-retardant layer on a side opposite to the base material has a coefficient of friction measured in conformity with JIS-K-7125:1999 of 2.00 N/40 cm² or less.

## Description

The present invention relates to a flame-retardant member, a flame-retardant composition, and a flame-retardant dispersion liquid. Specifically, the present invention relates to a flame-retardant member, a flame-retardant composition that forms a flame-retardant layer of the flame-retardant member, and a flame-retardant dispersion liquid to be used in preparation of the flame-retardant composition.

A method involving kneading and compounding a metal hydroxide into a combustible organic compound has been reported for imparting flame retardancy to the combustible organic compound (see Patent Literature 1).

However, in the report, a large amount of the metal hydroxide has been compounded as a flame retardant for imparting flame retardancy to the combustible organic compound. Accordingly, the transparency of a flame-retardant film to be formed reduces. When such flame-retardant film having low transparency is formed on a base material in which emphasis is placed on a design property (e.g. , a leather, a woven fabric, a nonwoven fabric, a wood panel, or a plastic), the design property of the base material is impaired.

In addition, as the amount of the flame retardant to be compounded into the flame-retardant film becomes larger, the weight of the flame-retardant film increases. Accordingly, when a flame-retardant member obtained by forming such heavy flame-retardant film on a base material is used in a transportation machine (e.g., an aircraft, a railway vehicle, a ship, or an automobile), its fuel efficiency reduces.

In addition, as the amount of the flame retardant to be compounded into the flame-retardant film becomes larger, the strength of the film surface of the flame-retardant film reduces. Accordingly, a flaw on the film surface due to abrasion occurs.

### Citation List

### Patent Literature

[PTL 1] JP 2004-331689 A

An object of the present invention is to provide a flame-retardant member having a flame-retardant layer that has sufficient flame retardancy, has high transparency, and has high strength of its film surface, to provide a flame-retardant composition that forms such flame-retardant layer, and to provide a flame-retardant dispersion liquid to be used in the preparation of such flame-retardant composition.

A flame-retardant member according to one embodiment of the present invention includes:
a flame-retardant layer; and
a base material,
in which:
the flame-retardant layer has a haze of 35% or less; and
a surface of the flame-retardant layer on a side opposite to the base material has a coefficient of friction measured in conformity with JIS-K-7125:1999 of 2.00 N/40 cm² or less.

In one embodiment, the flame-retardant layer contains 20 wt% to 65 wt% of flame-retardant particles having a particle diameter D90 of 500 nm or less with respect to 100 wt% of all constituent components of the flame-retardant layer.

In one embodiment, the flame-retardant particles have a particle diameter D50 of 200 nm or less.

In one embodiment, the flame-retardant particles have a particle diameter D10 of 110 nm or less.

In one embodiment, the flame-retardant particles each include a metal hydroxide.

In one embodiment, the metal hydroxide includes at least one kind selected from aluminum hydroxide and magnesium hydroxide.

In one embodiment, the flame-retardant layer contains a binder resin.

In one embodiment, the flame-retardant layer has a thickness of from 10 µm to 500 µm.

In one embodiment, the base material includes at least one kind selected from a leather, a woven fabric, a nonwoven fabric, a wood panel, and a plastic.

A flame-retardant composition according to one embodiment of the present invention forms the flame-retardant layer of the flame-retardant member of the present invention.

In one embodiment, the flame-retardant composition includes a resin dispersion liquid including flame-retardant particles, a binder resin, and an aqueous liquid.

A flame-retardant dispersion liquid according to one embodiment of the present invention is a flame-retardant dispersion liquid to be used in preparation of the flame-retardant composition of the present invention, including:
flame-retardant particles; and
an aqueous liquid.

In one embodiment, the flame-retardant particles include flame-retardant particles pulverized with a pulverizer.

According to the present invention, the flame-retardant member having a flame-retardant layer that has sufficient flame retardancy, has high transparency, and has high strength of its film surface can be provided. Further, the flame-retardant composition that forms such flame-retardant layer can be provided. Further, the flame-retardant dispersion liquid to be used in the preparation of such flame-retardant composition can be provided.

### Brief Description of Drawings

FIG. 1 is a schematic sectional view for illustrating an example of a flame-retardant member of the present invention.
FIG. 2 is a black-and-white binarized image of the results of the abrasion test of a flame-retardant member (2A) obtained in Example 2 of the present invention.
FIG. 3 is a black-and-white binarized image of the results of the abrasion test of a flame-retardant member (3A) obtained in Example 3 of the present invention.
FIG. 4 is a black-and-white binarized image of the results of the abrasion test of a flame-retardant member (C2A) obtained in Comparative Example 2 of the present invention.

### «Flame-retardant Member»

A flame-retardant member of the present invention includes a flame-retardant layer and a base material. When the flame-retardant member of the present invention includes the flame-retardant layer, more sufficient flame retardancy can be imparted to the flame-retardant member. As long as the flame-retardant member of the present invention includes the flame-retardant layer and the base material, the member may include any appropriate other member to the extent that the effects of the present invention are not impaired.

In the flame-retardant member of the present invention, the flame-retardant layer may be a single-layer body formed only of one layer, or may be a laminate formed of two or more layers.

In the flame-retardant member of the present invention, the number of kinds of the base materials may be only one, or may be two or more.

The flame-retardant member of the present invention is preferably formed by directly laminating the flame-retardant layer and the base material, and is more preferably formed of the flame-retardant layer and the base material.

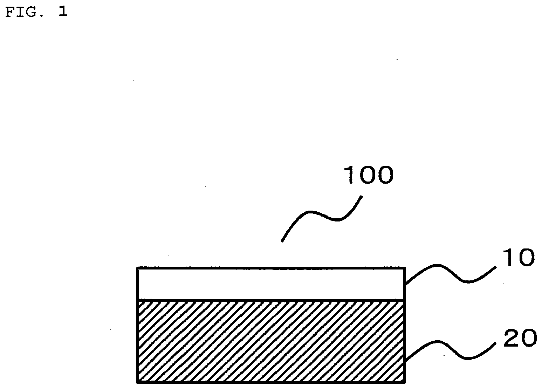

FIG. 1 is a schematic sectional view for illustrating an example of the flame-retardant member of the present invention. In FIG. 1, a flame-retardant member 100 is formed of a flame-retardant layer 10 and a base material 20.

### <Flame-retardant Layer>

The haze of the flame-retardant layer is 35% or less , preferably 30% or less, more preferably 25% or less, still more preferably 20% or less, particularly preferably 15% or less, most preferably 10% or less. When the haze of the flame-retardant layer falls within the range, the transparency of the flame-retardant layer can be improved. Accordingly, when such flame-retardant layer having high transparency is arranged on a base material in which emphasis is placed on a design property (e.g., a leather, a woven fabric, a nonwoven fabric, a wood panel, or a plastic), the design property of the base material is hardly impaired.

The coefficient of friction of the surface of the flame-retardant layer on a side opposite to the base material measured in conformity with JIS-K-7125:1999 is 2.00 N/40 cm² or less, preferably 1.80 N/40 cm² or less, more preferably 1.60 N/40 cm² or less, still more preferably 1.40 N/40 cm² or less, particularly preferably 1.30 N/40 cm² or less, most preferably 1.20 N/40 cm² or less. When the coefficient of friction of the surface of the flame-retardant layer on the side opposite to the base material measured in conformity with JIS-K-7125 :1999 falls within the range, the strength of the film surface of the flame-retardant layer on the side opposite to the base material can be improved, and hence, for example, a flaw on the film surface due to abrasion hardly occurs.

The flame-retardant layer preferably contains flame-retardant particles. When the flame-retardant layer contains the flame-retardant particles, more sufficient flame retardancy can be imparted to the flame-retardant member.

The maximum particle diameter of the flame-retardant particles is preferably 1,000 nm or less, more preferably 800 nm or less, still more preferably 600 nm or less, particularly preferably 450 nm or less, most preferably 400 nm or less. When the maximum particle diameter of the flame-retardant particles falls within the range, even more sufficient flame retardancy can be imparted to the flame-retardant member, and the transparency of the flame-retardant layer can be further improved. Accordingly, when such flame-retardant layer having high transparency is arranged on a base material in which emphasis is placed on a design property (e.g. , a leather, a woven fabric, a nonwoven fabric, a wood panel, or a plastic), the design property of the base material is more hardly impaired. In addition, when the maximum particle diameter of the flame-retardant particles falls within the range, the strength of the film surface of the flame-retardant layer on the side opposite to the base material can be further improved, and hence, for example, a flaw on the film surface due to abrasion more hardly occurs.

The flame-retardant layer more preferably contains 20 wt% to 65 wt% of flame-retardant particles having a particle diameter D90 of 500 nm or less with respect to 100 wt% of all constituent components of the flame-retardant layer, and the content is preferably from 20 wt% to 63 wt%, more preferably from 20 wt% to 60 wt%, still more preferably from 25 wt% to 60 wt%, still further more preferably from 31 wt% to 60 wt%, particularly preferably from 35 wt% to 58 wt%, most preferably from 35 wt% to 53 wt%. When the flame-retardant layer contains the flame-retardant particles having a particle diameter D90 of 500 nm or less at a ratio within the range with respect to 100 wt% of all constituent components thereof, even more sufficient flame retardancy can be imparted to the flame-retardant member, and the transparency of the flame-retardant layer can be further improved. Accordingly, when such flame-retardant layer having higher transparency is arranged on a base material in which emphasis is placed on a design property (e.g., a leather, a woven fabric, a nonwoven fabric, a wood panel, or a plastic), the design property of the base material is more hardly impaired. In addition, the strength of the film surface of the flame-retardant layer on the side opposite to the base material can be further improved, and hence, for example, a flaw on the film surface due to abrasion more hardly occurs. Further, the weight of the flame-retardant layer can be reduced.

The particle diameter D90 of the flame-retardant particles in the flame-retardant layer is preferably 400 nm or less, more preferably 300 nm or less, still more preferably 200 nm or less, particularly preferably 100 nm or less, most preferably 80 nm or less. When the particle diameter D90 of the flame-retardant particles in the flame-retardant layer falls within the range, even more sufficient flame retardancy can be imparted to the flame-retardant member, and the transparency of the flame-retardant layer can be further improved. Accordingly, when such flame-retardant layer having higher transparency is arranged on a base material in which emphasis is placed on a design property (e.g., a leather, a woven fabric, a nonwoven fabric, a wood panel, or a plastic), the design property of the base material is more hardly impaired. In addition, when the particle diameter D90 of the flame-retardant particles in the flame-retardant layer falls within the range, the strength of the film surface of the flame-retardant layer on the side opposite to the base material can be further improved, and hence, for example, a flaw on the film surface due to abrasion more hardly occurs.

The flame-retardant layer more preferably contains 20 wt% to 65 wt% of flame-retardant particles having a particle diameter D50 of 200 nm or less with respect to 100 wt% of all constituent components of the flame-retardant layer, and the content is preferably from 20 wt% to 63 wt%, more preferably from 20 wt% to 60 wt%, still more preferably from 25 wt% to 60 wt%, still further more preferably from 31 wt% to 60 wt%, particularly preferably from 35 wt% to 58 wt%, most preferably from 35 wt% to 53 wt%. When the flame-retardant layer contains the flame-retardant particles having a particle diameter D50 of 200 nm or less at a ratio within the range with respect to 100 wt% of all constituent components thereof, even more sufficient flame retardancy can be imparted to the flame-retardant member, and the transparency of the flame-retardant layer can be further improved. Accordingly, when such flame-retardant layer having higher transparency is arranged on a base material in which emphasis is placed on a design property (e.g., a leather, a woven fabric, a nonwoven fabric, a wood panel, or a plastic), the design property of the base material is more hardly impaired. In addition, the strength of the film surface of the flame-retardant layer on the side opposite to the base material can be further improved, and hence, for example, a flaw on the film surface due to abrasion more hardly occurs . Further, the weight of the flame-retardant layer can be reduced.

The particle diameter D50 of the flame-retardant particles in the flame-retardant layer is preferably 160 nm or less, more preferably 130 nm or less, still more preferably 100 nm or less, particularly preferably 80 nm or less, most preferably 50 nm or less. When the particle diameter D50 of the flame-retardant particles in the flame-retardant layer falls within the range, even more sufficient flame retardancy can be imparted to the flame-retardant member, and the transparency of the flame-retardant layer can be further improved. Accordingly, when such flame-retardant layer having higher transparency is arranged on a base material in which emphasis is placed on a design property (e.g., a leather, a woven fabric, a nonwoven fabric, a wood panel, or a plastic), the design property of the base material is more hardly impaired. In addition, when the particle diameter D50 of the flame-retardant particles in the flame-retardant layer falls within the range, the strength of the film surface of the flame-retardant layer on the side opposite to the base material can be further improved, and hence, for example, a flaw on the film surface due to abrasion more hardly occurs.

The flame-retardant layer more preferably contains 20 wt% to 65 wt% of flame-retardant particles having a particle diameter D10 of 110 nm or less with respect to 100 wt% of all constituent components of the flame-retardant layer, and the content is preferably from 20 wt% to 63 wt%, more preferably from 20 wt% to 60 wt%, still more preferably from 20 wt% to 58 wt%, particularly preferably from 20 wt% to 55 wt%, most preferably from 20 wt% to 53 wt%. When the flame-retardant layer contains the flame-retardant particles having a particle diameter D10 of 110 nm or less at a ratio within the range with respect to 100 wt% of all constituent components thereof, even more sufficient flame retardancy can be imparted to the flame-retardant member, and the transparency of the flame-retardant layer can be further improved. Accordingly, when such flame-retardant layer having higher transparency is arranged on a base material in which emphasis is placed on a design property (e.g., a leather, a woven fabric, a nonwoven fabric, a wood panel, or a plastic), the design property of the base material is more hardly impaired. In addition, the strength of the film surface of the flame-retardant layer on the side opposite to the base material can be further improved, and hence, for example, a flaw on the film surface due to abrasion more hardly occurs. Further, the weight of the flame-retardant layer can be reduced.

The particle diameter D10 of the flame-retardant particles in the flame-retardant layer is preferably 100 nm or less, more preferably 90 nm or less, still more preferably 70 nm or less, particularly preferably 50 nm or less, most preferably 40 nm or less. When the particle diameter D10 of the flame-retardant particles in the flame-retardant layer falls within the range, even more sufficient flame retardancy can be imparted to the flame-retardant member, and the transparency of the flame-retardant layer can be further improved. Accordingly, when such flame-retardant layer having higher transparency is arranged on a base material in which emphasis is placed on a design property (e.g. , a leather, a woven fabric, a nonwoven fabric, a wood panel, or a plastic), the design property of the base material is more hardly impaired. In addition, when the particle diameter D10 of the flame-retardant particles in the flame-retardant layer falls within the range, the strength of the film surface of the flame-retardant layer on the side opposite to the base material can be further improved, and hence, for example, a flaw on the film surface due to abrasion more hardly occurs.

A ratio (D90/D10) between the particle diameter D10 and particle diameter D90 of the flame-retardant particles in the flame-retardant layer is preferably 3.5 or less, more preferably 3.0 or less, still more preferably 2.8. or less, particularly preferably 2.4 or less. A lower limit value for the D90/D10 is typically 2.0 or more. When the ratio (D90/D10) between the particle diameter D10 and the particle diameter D90 is small, the distribution of the particle diameters is narrow. Accordingly, particularly high transparency can be expressed and a flaw on the film surface due to abrasion hardly occurs.

Any appropriate flame-retardant particles may be adopted as the flame-retardant particles to the extent that the effects of the present invention are not impaired. The number of kinds of the flame-retardant particles may be only one, or may be two or more. Examples of such flame-retardant particles include inorganic particles, organic particles, and organic-inorganic composite particles. Specific examples thereof include a metal hydroxide, a halogen compound, a phosphorus compound, a nitrogen compound, an intumescent flame retardant, a silicone compound, a boron compound, andanantimonycompound. Of those, themetalhydroxideispreferred. The flame-retardant particles are each preferably an inorganic particle, more preferably the metal hydroxide. The adoption of such inorganic particles can impart sufficient flame retardancy to the flame-retardant member.

Any appropriate metal hydroxide may be adopted as the metal hydroxide to the extent that the effects of the present invention are not impaired. Such metal hydroxide is preferably at least one kind selected from aluminum hydroxide, magnesium hydroxide, calcium hydroxide, calcium aluminate, calcium magnesium carbonate, hydromagnesite, zinc borate, kaolin clay, hydrotalcite, bentonite, and calcium sulfate.

The flame-retardant layer preferably contains a binder resin. The number of kinds of the binder resins may be only one, or may be two or more.

Any appropriate binder resin may be adopted as the binder resin to the extent that the effects of the present invention are not impaired. Examples of such binder resin include an acrylic resin, a urethane-based resin, a urethane acrylic resin, a silicone-based resin, an epoxy-based resin, a polyester-based resin, a melamine-based resin, a polyimide-based resin, a polyether-based resin, polyethylene, polypropylene, vinyl acetate, EVA, PVA, PVB, triacetylcellulose, and polyvinylidene fluoride.

When the flame-retardant layer contains the binder resin, the content of the binder resin with respect to 100 wt% of all constituent components of the flame-retardant layer is preferably from 15 wt% to 80 wt%, more preferably from 15 wt% to 60 wt%, still more preferably from 27 wt% to 60 wt%, most preferably from 30 wt% to 60 wt%. When the content of the binder resin with respect to 100 wt% of all constituent components of the flame-retardant layer falls within the range, even more sufficient flame retardancy can be imparted to the flame-retardant member, and the transparency of the flame-retardant layer can be further improved. Accordingly, when such flame-retardant layer having higher transparency is arranged on a base material in which emphasis is placed on a design property (e.g., a leather, a woven fabric, a nonwoven fabric, a wood panel, or a plastic), the design property of the base material is more hardly impaired. In addition, the strength of the film surface of the flame-retardant layer on the side opposite to the base material can be further improved, and hence, for example, a flaw on the film surface due to abrasion more hardly occurs. Further, the weight of the flame-retardant layer can be reduced.

A ratio between the flame-retardant particles and the binder resin in the flame-retardant layer may be appropriately set in accordance with purposes as long as the ratio is such that a dispersed state is formed. Such ratio is preferably from 1.0:3.0 to 3.0:1.0, more preferably from 1.0:2.5 to 2.5:1.0, still more preferably from 1.0:2.2 to 2.2:1.0 in terms of a ratio "weight of flame-retardant particles:weight of binder resin." When the ratio "weight of flame-retardant particles : weight of binder resin" falls within such range, both the flame retardancy of the flame-retardant layer and the strength of the film surface can be achieved.

The flame-retardant layermaycontain in itself anyappropriate other component to the extent that the ef f ects of the present invention are not impaired. Examples of such other component include a thickener, a surface modifier, a cross-linking agent, a film formation aid, a dispersant, a defoaming agent, an antiseptic agent, an antioxidant, a light stabilizer, a colorant, and a delustrant.

The thickness of the flame-retardant layer is preferably from 10 µm to 500 µm, more preferably from 10 µm to 100 µm, still more preferably from 20 µm to 100 µm, particularly preferably from 30 µm to 100 µm, most preferably from 50 µm to 80 µm. When the thickness of the flame-retardant layer falls within the range, sufficient flame retardancy can be imparted to the flame-retardant member, and the transparency of the flame-retardant layer can be further improved. Accordingly, when such flame-retardant layer having higher transparency is arranged on a base material in which emphasis is placed on a design property (e.g., a leather, a woven fabric, a nonwoven fabric, a wood panel, or a plastic), the design property of the base material is more hardly impaired. Further, the weight of the flame-retardant layer can be further reduced.

### <Base Material>

Any appropriate base material may be adopted as the base material to the extent that the effects of the present invention are not impaired. Such base material is, for example, at least one kind selected from a leather, a woven fabric, a nonwoven fabric, and a plastic because the effects of the present invention can be further expressed. That is, at least one kind selected from the leather, the woven fabric, the nonwoven fabric, a wood panel, and the plastic is a base material in which emphasis is often placed on a design property, and hence while the flame-retardant member of the present invention obtained by arranging the above-mentioned flame-retardant layer on such base material can have sufficient flame retardancy, the transparency of the flame-retardant layer can be improved. Accordingly, the design property of the base material is more hardly impaired.

Any appropriate shape may be adopted as the shape of the base material to the extent that the effects of the present invention are not impaired.

### «Flame-retardant Composition»

A flame-retardant composition of the present invention forms the flame-retardant layer of the flame-retardant member of the present invention. That is, the flame-retardant layer of the flame-retardant member of the present invention is formed from the flame-retardant composition of the present invention.

The flame-retardant layer of the flame-retardant member of the present invention is preferably formed by: applying the flame-retardant composition of the present invention onto any appropriate base material (preferably the base material of the flame-retardant member of the present invention); and drying the resultant as required. The amount in which the composition is applied needs only to be appropriately set so that the thickness of the flame-retardant layer to be finally formed may be adesired thickness.

Any appropriate application method may be adopted as a method for the application to the extent that the effects of the present invention are not impaired.

The flame-retardant composition of the present invention is preferably a resin dispersion liquid including flame-retardant particles, a binder resin, and an aqueous liquid. The flame-retardant composition of the present invention may contain any appropriate other component to the extent that the effects of the present invention are not impaired.

The description in the section <Flame-retardant Layer> in the section <<Flame-retardant Member>> may be cited as it is for individual description of each of the flame-retardant particles, the binder resin, and the other component.

With regard to the content of the flame-retardant particles, the description in the section <Flame-retardant Layer> in the section «Flame-retardant Member» refers to a content under a state in which a layer shape is formed (state in which substantially no aqueous liquid is incorporated), and hence the content is different from the content of the flame-retardant particles in the flame-retardant composition of the present invention (content in the resin dispersion liquid containing the aqueous liquid).

That is, the content of the flame-retardant particles in the flame-retardant composition of the present invention is preferably from 20 wt% to 65 wt%, more preferably from 20 wt% to 63 wt%, still more preferably from 20 wt% to 60 wt%, still further more preferably from 25 wt% to 60 wt%, even still further more preferably from 31 wt% to 60 wt%, particularly preferably from 35 wt% to 60 wt%, most preferably from 35 wt% to 53 wt% with respect to 100 wt% of all constituent components of the flame-retardant composition except the aqueous liquid.

With regard to the content of the binder resin, the description in the section <Flame-retardant Layer> in the section «Flame-retardant Member» refers to a content under a state in which the layer shape is formed (state in which substantially no aqueous liquid is incorporated), and hence the content is different from the content of the binder resin in the flame-retardant composition of the present invention (content in the resin dispersion liquid containing the aqueous liquid).

That is, the content of the binder resin in the flame-retardant composition of the present invention is preferably from 15 wt% to 80 wt%, more preferably from 15 wt% to 60 wt%, still more preferably from 27 wt% to 60 wt%, most preferably from 30 wt% to 60 wt% with respect to 100 wt% of all constituent components of the flame-retardant composition except the aqueous liquid.

A ratio between the flame-retardant particles and the binder resin in the flame-retardant composition of the present invention may be appropriately set in accordance with purposes as long as the ratio is such that a dispersed state is formed. Such ratio is preferably from 1.0:3.0 to 3.0:1.0, more preferably from 1.0:2.5 to 2.5:1.0, still more preferably from 1.0:2.2 to 2.2:1.0 in terms of a ratio "weight of flame-retardant particles:weight of binder resin." When the ratio "weight of flame-retardant particles: weight of binder resin" falls within such range, both the flame retardancy of the flame-retardant layer and the strength of its film surface can be achieved.

The aqueous liquid is preferably water, an alcohol, or a mixed liquid of water and an alcohol, and is more preferably water because its environmental load is low.

The flame-retardant composition of the present invention may be prepared by any appropriate method to the extent that the effects of the present invention are not impaired. Such preparation method is, for example, a method involving compounding a flame-retardant dispersion liquid including the flame-retardant particles and the aqueous liquid (described later), and an emulsion of the binder resin (preferably a water dispersion liquid of the binder resin) to prepare the composition. In this case, the contents of the flame-retardant particles and the binder resin after the removal of the aqueous liquid from the flame-retardant composition after the preparation need only to be adjusted to fall within the ranges.

### «Flame-retardant Dispersion Liquid»

A flame-retardant dispersion liquid of the present invention is a flame-retardant dispersion liquid to be used in the preparation of the flame-retardant composition of the present invention, and includes flame-retardant particles and an aqueous liquid.

A ratio between the flame-retardant particles and the aqueous liquid in the flame-retardant dispersion liquid of the present invention may be appropriately set in accordance with purposes as long as the ratio is such that a dispersed state is formed. Such ratio is preferably from 1:0.25 to 1:9, more preferably from 1:0.6 to 1: 5, still more preferably from 1 : 1 to 1: 5 , particularly preferably from 1:1.5 to 1:4 in terms of a ratio "weight of flame-retardant particles:weight of aqueous liquid."

It is preferred that the flame-retardant dispersion liquid of the present invention be substantially free of a binder resin. The phrase "substantially free" as used herein means that the content of the binder resin in the flame-retardant dispersion liquid needs only to be substantially 0 wt%, and is meant to include, for example, the case where the binder resin is incorporated at an impurity level.

The flame-retardant composition of the present invention may be prepared by compounding the flame-retardant dispersion liquid of the present invention and an emulsion of the binder resin.

The flame-retardant dispersion liquid of the present invention is obtained by dispersing the flame-retardant particles in the aqueous liquid. The description in the section <Flame-retardant Layer> in the section <<Flame -retardant Member>> may be cited as it is for individual description of each of the flame-retardant particles and the aqueous liquid.

The flame-retardant dispersion liquid of the present invention may contain any appropriate other component to the extent that the effects of the present invention are not impaired. Examples of such other component include a dispersant, a defoaming agent, an antiseptic agent, an antioxidant, a light stabilizer, a colorant, adelustrant, athickener, a surface modifier, a cross-linking agent, and a film formation aid.

The maximum particle diameter of the flame-retardant particles in the flame-retardant dispersion liquid of the present invention is preferably 1,000 nm or less, more preferably 800 nm or less, still more preferably 600 nm or less, particularly preferably 450 nm or less, most preferably 4 00 nm or less. When the maximum particle diameter of the flame-retardant particles in the flame-retardant dispersion liquid of the present invention falls within the range, more sufficient flame retardancy can be imparted to a flame-retardant layer obtained by forming the flame-retardant composition of the present invention obtained by using the flame-retardant dispersion liquid of the present invention, and higher transparency can be imparted thereto. In addition, when the maximum particle diameter of the flame-retardant particles in the flame-retardant dispersion liquid of the present invention falls within the range, the strength of the film surface of the flame-retardant layer, which is obtained by forming the flame-retardant composition of the present invention obtained by using the flame-retardant dispersion liquid of the present invention, on a side opposite to a base material can be further improved, and hence, for example, a flaw on the film surface due to abrasion more hardly occurs.

The particle diameter D90 of the flame-retardant particles in the flame-retardant dispersion liquid of the present invention is preferably 400 nm or less, more preferably 300 nm or less, still more preferably 200 nm or less, particularly preferably 100 nm or less, most preferably 80 nm or less. When the particle diameter D90 of the flame-retardant particles in the flame-retardant dispersion liquid of the present invention falls within the range, more sufficient flame retardancy can be imparted to a flame-retardant layer obtained by forming the flame-retardant composition of the present invention obtained by using the flame-retardant dispersion liquid of the present invention, and higher transparency can be imparted thereto. In addition, when the particle diameter D90 of the flame-retardant particles in the flame-retardant dispersion liquid of the present invention falls within the range, the strength of the film surface of the flame-retardant layer, which is obtained by forming the flame-retardant composition of the present invention obtained by using the flame-retardant dispersion liquid of the present invention, on a side opposite to a base material can be further improved, and hence, for example, a flaw on the film surface due to abrasion more hardly occurs.

The particle diameter D50 of the flame-retardant particles in the flame-retardant dispersion liquid of the present invention is preferably 160 nm or less, more preferably 130 nm or less, still more preferably 100 nm or less, particularly preferably 80 nm or less, most preferably 50 nm or less. When the particle diameter D50 of the flame-retardant particles in the flame-retardant dispersion liquid of the present invention falls within the range, more sufficient flame retardancy can be imparted to a flame-retardant layer obtained by forming the flame-retardant composition of the present invention obtained by using the flame-retardant dispersion liquid of the present invention, and higher transparency can be imparted thereto. In addition, when the particle diameter D50 of the flame-retardant particles in the flame-retardant dispersion liquid of the present invention falls within the range, the strength of the film surface of the flame-retardant layer, which is obtained by forming the flame-retardant composition of the present invention obtained by using the flame-retardant dispersion liquid of the present invention, on a side opposite to a base material can be further improved, and hence, for example, a flaw on the film surface due to abrasion more hardly occurs.

The particle diameter D10 of the flame-retardant particles in the flame-retardant dispersion liquid of the present invention is preferably, 100 nm or less, more preferably 90 nm or less, still more preferably 70 nm or less, particularly preferably 50 nm or less, most preferably 40 nm or less. When the particle diameter D10 of the flame-retardant particles in the flame-retardant dispersion liquid of the present invention falls within the range, more sufficient flame retardancy can be imparted to a flame-retardant layer obtained by forming the flame-retardant composition of the present invention obtained by using the flame-retardant dispersion liquid of the present invention, and higher transparency can be imparted thereto. In addition, when the particle diameter D10 of the flame-retardant particles in the flame-retardant dispersion liquid of the present invention falls within the range, the strength of the film surface of the flame-retardant layer, which is obtained by forming the flame-retardant composition of the present invention obtained by using the flame-retardant dispersion liquid of the present invention, on a side opposite to a base material can be further improved, and hence, for example, a flaw on the film surface due to abrasion more hardly occurs.

The flame-retardant particles in the flame-retardant dispersion liquid of the present invention are preferably flame-retardant particles pulverized with a pulverizer. The pulverization with the pulverizer can provide flame-retardant particles having the above-mentioned preferred physical properties . Flame-retardant particlesbefore the pulverization are, for example , commercial flame-retardant particles.

A specific example of the pulverization with the pulverizer is pulverization using a roller mill, a jet mill, a hammer mill, a pin mill, a tumbling mill, a vibration mill, a planetary mill, an attritor, a bead mill, or the like.

Conditions for the pulverization with the pulverizer need only to be appropriately set to such conditions that the flame-retardant particles having the above-mentioned preferred physical properties are finally obtained.

Now, the present invention is more specifically described by way of Examples and Comparative Examples. However, the present invention is by no means limited thereto. In the following description, the terms "part (s) " and "%" refer to "part (s) by weight" and "wt%," respectively unless otherwise stated.

### <Measurement of Particle Size Distribution>

A particle dispersion liquid was diluted with water so as to have a solid content concentration of from about 0.01 wt% to about 0.1 wt%. The particle size distribution of the diluted liquid was measured with a particle size distribution meter "NANOTRAC WAVE Q" (manufactured by Microtrac), and a D10, a D50, a D90, and the maximum particle diameter in a number distribution were determined. The measurement was performed three times over 30 seconds, and the average of the measured values was adopted.

With regard to conditions at the time of the measurement, the shape of each of particles was set to a spherical shape and the refractive index of each of the particles was set as follows: the refractive index of aluminum hydroxide was set to 1.53 and the refractive index of magnesium hydroxide was set to 1.56.

### <Measurement of Haze>

A haze was measured in conformity with ASTM-D-1003 by using "BYK haze-gard plus" (manufactured by BYK-Gardner GmbH) as an apparatus.

### <Measurement of Coefficient of Friction>

A coefficient of dynamic friction was measured in conformity with JIS-K-7125:1999 (Plastics-Film and sheeting-Determination of the coefficients of friction) by using "Tensile Force Tester" (manufactured by Zwick Roell) as an apparatus under the conditions of: a load cell of 100 N; a size of a test piece of 80 mmx200 mm; a size of the bottom surface of a sliding piece (the bottom surface was made of felt) of 63 mmx63 mm; a total mass of the sliding piece of 200 g (corresponding to 1.96 N) ; an area of contact between the sliding piece and the test piece of 40 cm²; and a test speed of 300 mm/min.

### <Abrasion Test>

An abrasion test was performed by using "APG1000 abrasion tester" (manufactured by Maag Flockmaschinen GmbH) as an apparatus under the following conditions . A photograph of an abraded surface after the abrasion test was monochromatically binarized, and the area ratio of a black portion in the entire surface was determined. The area ratio of the black portion corresponds to the ratio of an abraded area.
Terminal: B20 having a radius of 0.16 mm and wrapped with a cloth
Load: 1,000 g
Rate: 60 times/min
Number of times: 100 times

### <Flame Retardancy Test>

A flame retardancy test was performed under the following conditions in conformity with EN ISO 11925-2.
Flame contact angle: 45 degrees
Flame contact method: surface application
Evaluation item: The number of times that the flame was brought into contact with the surface until the surface burned (the repetition of an operation in which the flame was isolated for 10 seconds after the flame had been brought into contact with the surface for 5 seconds)

The number of times that the flame was brought into contact with the surface until the surface burned for the flame-retardant member of the present invention is preferably two times or more, more preferably three times or more, still more preferably four times or more.

### [Synthesis Example 1]: Preparation of Flame-retardant Dispersion Liquid (1)

1,000 Grams of aluminum hydroxide (trade name: MARTINAL OL-111LE, manufactured by Albemarle Corporation), 500 g of a dispersant (Disperbyk-190, solid content concentration: 40%, manufactured by BYK), 20 gof adefoamingagent (BYK-024, manufactured by BYK), and 2,730 g of water were loaded into a pulverizer, and were pulverized for 30 minutes to prepare a flame-retardant dispersion liquid (1) having a particle diameter D10 of 85 nm, a particle diameter D50 of 127 nm, a particle diameter D90 of 320 nm, and a maximum particle diameter of 687 nm in the number particle size distribution of aluminum hydroxide.

### [Synthesis Example 2]: Preparation of Flame-retardant Dispersion Liquid (2)

1,000 Grams of aluminum hydroxide (trade name: MARTINAL OL-111LE, manufactured by Albemarle Corporation), 500 g of a dispersant (Disperbyk-190, solid content concentration: 40%, manufactured by BYK), 20 g of a defoaming agent (BYK-024, manufactured by BYK), and 2,730 g of water were loaded into a pulverizer, and were pulverized for 45 minutes to prepare a flame-retardant dispersion liquid (2) having a particle diameter D10 of 102 nm, a particle diameter D50 of 154 nm, a particle diameter D90 of 298 nm, and a maximum particle diameter of 578 nm in the number particle size distribution of aluminum hydroxide.

### [Synthesis Example 3]: Preparation of Flame-retardant Dispersion Liquid (3)

1,000 Grams of aluminum hydroxide (trade name: MARTINAL OL-111LE, manufactured by Albemarle Corporation), 500 g of a dispersant (Disperbyk-190, solid content concentration: 40%, manufactured by BYK), 20 gof adefoamingagent (BYK-024, manufactured by BYK), and 2,730 g of water were loaded into a pulverizer, and were pulverized for 60 minutes to prepare a flame-retardant dispersion liquid (3) having a particle diameter D10 of 88 nm, a particle diameter D50 of 122 nm, a particle diameter D90 of 222 nm, and a maximum particle diameter of 409 nm in the number particle size distribution of aluminum hydroxide.

### [Synthesis Example 4]: Preparation of Flame-retardant Dispersion Liquid (4)

1,000 Grams of aluminum hydroxide (trade name: MARTINAL OL-111LE, manufactured by Albemarle Corporation), 625 g of a dispersant (Disperbyk-190, solid content concentration: 40%, manufactured by BYK), 20 g of a defoaming agent (BYK-024, manufactured by BYK), and 2,605 g of water were loaded into a pulverizer, and were pulverized for 180 minutes to prepare a flame-retardant dispersion liquid (4) having a particle diameter D10 of 36 nm, a particle diameter D50 of 48 nm, a particle diameter D90 of 77 nm, and a maximum particle diameter of 344 nm in the number particle size distribution of aluminum hydroxide.

### [Synthesis Example 5]: Preparation of Flame-retardant Dispersion Liquid (5)

1,000 Grams of magnesium hydroxide (trade name: MAGNIFINH-10, manufactured by Albemarle Corporation), 750 g of a dispersant (Disperbyk-190, solid content concentration: 40%, manufactured by BYK), 20 g of a defoaming agent (BYK-024, manufactured by BYK), and 2 , 480 g of water were loaded into a pulverizer, and were pulverized for 180 minutes to prepare a flame-retardant dispersion liquid (5) having a particle diameter D10 of 47 nm, a particle diameter D50 of 60 nm, a particle diameter D90 of 97 nm, and a maximum particle diameter of 409 nm in the number particle size distribution of magnesium hydroxide.

### [Example 1]

A flame-retardant composition (1) was obtained by adding 58 g of the flame-retardant dispersion liquid (2) to 20 g of an acrylic resin emulsion (Acronal DS6277, solid content concentration: 48%, manufactured by BASF), and performing such adjustment that an aluminum hydroxide concentration after drying became 52 wt%. The prepared flame-retardant composition (1) was applied onto a polycarbonate plate having a thickness of 1.0 mm so as to have a thickness of 50 µm, and was dried at 23°C for 24 hours. Thus, a flame-retardant member (1A) having formed thereon a flame-retardant layer was obtained. The flame-retardant member (1A) was subjected to the measurement of a haze, the measurement of a coefficient of friction, and an abrasion test.

In addition, the flame-retardant composition (1) was applied to one surface of a polyester fiber having a basis weight of 300 g/m² so that its applied weight after drying became 100 g/m². Thus, a flame-retardant member (1B) for a flame retardancy test having formed thereon a flame-retardant layer was obtained. The flame-retardant member (1B) was subjected to a flame retardancy test.

The results are shown in Table 1.

### [Example 2]

A flame-retardant composition (2) was obtained by adding 58 g of the flame-retardant dispersion liquid (3) to 20 g of an acrylic resin emulsion (Acronal DS6277, solid content concentration: 48%, manufactured by BASF), and performing such adjustment that an aluminum hydroxide concentration after drying became 52 wt%. The prepared flame-retardant composition (2) was applied onto a polycarbonate plate having a thickness of 1.0 mm so as to have a thickness of 50 µm, and was dried at 23°C for 24 hours. Thus, a flame-retardant member (2A) having formed thereon a flame-retardant layer was obtained. The flame-retardant member (2A) was subjected to the measurement of a haze, the measurement of a coefficient of friction, and an abrasion test.

In addition, the flame-retardant composition (2) was applied to one surface of a polyester fiber having a basis weight of 300 g/m² so that its applied weight after drying became 100 g/m². Thus, a flame-retardant member (2B) for a flame retardancy test having formed thereon a flame-retardant layer was obtained. The flame-retardant member (2B) was subjected to a flame retardancy test.

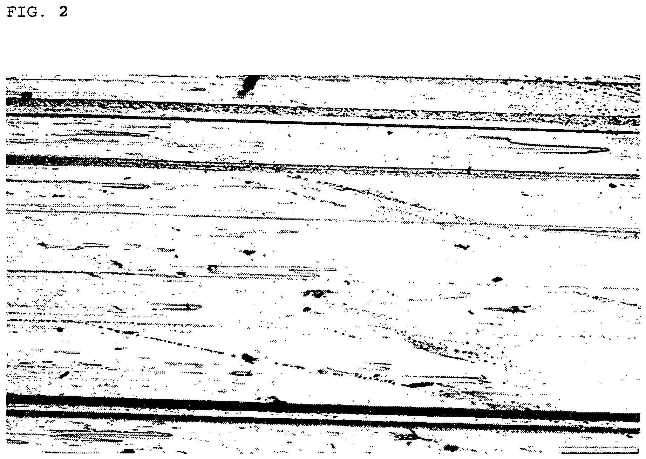

The results are shown in Table 1. In addition, a black-and-white binarized image of the results of the abrasion test is shown in FIG. 2.

### [Example 3]

A flame-retardant composition (3) was obtained by adding 63 g of the flame-retardant dispersion liquid (4) to 20 g of an acrylic resin emulsion (Acronal DS6277, solid content concentration: 48%, manufactured by BASF), and performing such adjustment that an aluminum hydroxide concentration after drying became 52 wt%. The prepared flame-retardant composition (3) was applied onto a polycarbonate plate having a thickness of 1.0 mm so as to have a thickness of 50 µm, and was dried at 23°C for 24 hours. Thus, a flame-retardant member (3A) having formed thereon a flame-retardant layer was obtained. The flame-retardant member (3A) was subjected to the measurement of a haze, the measurement of a coefficient of friction, and an abrasion test.

In addition, the flame-retardant composition (3) was applied to one surface of a polyester fiber having a basis weight of 300 g/m² so that its applied weight after drying became 100 g/m². Thus, a flame-retardant member (3B) for a flame retardancy test having formed thereon a flame-retardant layer was obtained. The flame-retardant member (3B) was subjected to a flame retardancy test.

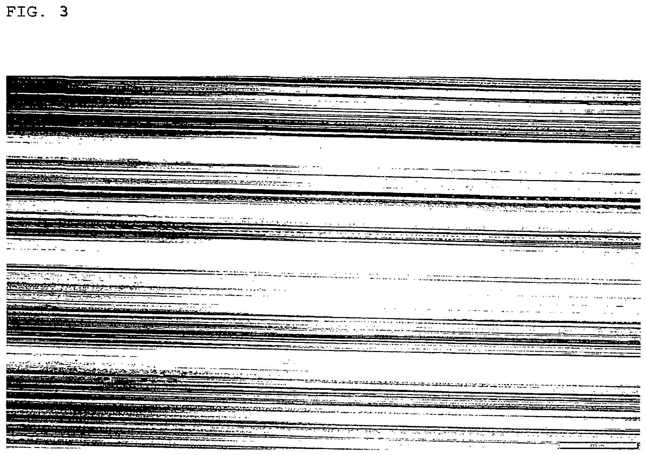

The results are shown in Table 1. In addition, a black-and-white binarized image of the results of the abrasion test is shown in FIG. 3.

### [Example 4]

A flame-retardant composition (4) was obtained by adding 20 g of the flame-retardant dispersion liquid (4) to 20 g of an acrylic resin emulsion (Acronal DS6277, solid content concentration: 48%, manufactured by BASF), and performing such adjustment that an aluminum hydroxide concentration after drying became 30 wt%. The prepared flame-retardant composition (4) was applied onto a polycarbonate plate having a thickness of 1.0 mm so as to have a thickness of 50 µm, and was dried at 23°C for 24 hours. Thus, a flame-retardant member (4A) having formed thereon a flame-retardant layer was obtained. The flame-retardant member (4A) was subjected to the measurement of a haze, the measurement of a coefficient of friction, and an abrasion test.

In addition, the flame-retardant composition (4) was applied to one surface of a polyester fiber having a basis weight of 300 g/m² so that its applied weight after drying became 100 g/m². Thus, a flame-retardant member (4B) for a flame retardancy test having formed thereon a flame-retardant layer was obtained. The flame-retardant member (4B) was subjected to a flame retardancy test.

The results are shown in Table 1.

### [Example 5]

A flame-retardant composition (5) was obtained by adding 103 g of the flame-retardant dispersion liquid (4) to 20 g of an acrylic resin emulsion (Acronal DS6277, solid content concentration: 48%, manufactured by BASF), and performing such adjustment that an aluminum hydroxide concentration after drying became 60 wt%. The prepared flame-retardant composition (5) was applied onto a polycarbonate plate having a thickness of 1.0 mm so as to have a thickness of 50 µm, and was dried at 23°C for 24 hours. Thus, a flame-retardant member (5A) having formed thereon a flame-retardant layer was obtained. The flame-retardant member (5A) was subjected to the measurement of a haze, the measurement of a coefficient of friction, and an abrasion test.

In addition, the flame-retardant composition (5) was applied to one surface of a polyester fiber having a basis weight of 300 g/m² so that its applied weight after drying became 100 g/m². Thus, a flame-retardant member (5B) for a flame retardancy test having formed thereon a flame-retardant layer was obtained. The flame-retardant member (5B) was subjected to a flame retardancy test.

The results are shown in Table 1.

### [Example 6]

A flame-retardant composition (6) was obtained by adding 68 g of the flame-retardant dispersion liquid (5) to 20 g of an acrylic resin emulsion (Acronal DS6277, solid content concentration: 48%, manufactured by BASF), and performing such adjustment that a magnesium hydroxide concentration after drying became 52 wt%. The prepared flame-retardant composition (6) was applied onto a polycarbonate plate having a thickness of 1.0 mm so as to have a thickness of 50 µm, and was dried at 23°C for 24 hours. Thus, a flame-retardant member (6A) having formed thereon a flame-retardant layer was obtained. The flame-retardant member (6A) was subjected to the measurement of a haze, the measurement of a coefficient of friction, and an abrasion test.

In addition, the flame-retardant composition (6) was applied to one surface of a polyester fiber having a basis weight of 300 g/m² so that its applied weight after drying became 100 g/m². Thus, a flame-retardant member (6B) for a flame retardancy test having formed thereon a flame-retardant layer was obtained. The flame-retardant member (6B) was subjected to a flame retardancy test.

The results are shown in Table 1.

### [Example 7]

A flame-retardant composition (7) was obtained by adding 18.5 g of the flame-retardant dispersion liquid (4) to 20 g of an acrylic resin emulsion (Acronal LR9014, solid content concentration: 45%, manufactured by BASF), and performing such adjustment that an aluminum hydroxide concentration after drying became 30 wt%. The prepared flame-retardant composition (7) was applied onto a polycarbonate plate having a thickness of 1.0 mm so as to have a thickness of 50 µm, and was dried at 23°C for 24 hours. Thus, a flame-retardant member (7A) having formed thereon a flame-retardant layer was obtained. The flame-retardant member (7A) was subjected to the measurement of a haze, the measurement of a coefficient of friction, and an abrasion test.

In addition, the flame-retardant composition (7) was applied to one surface of a polyester fiber having a basis weight of 300 g/m² so that its applied weight after drying became 100 g/m². Thus, a flame-retardant member (7B) for a flame retardancy test having formed thereon a flame-retardant layer was obtained. The flame-retardant member (7B) was subjected to a flame retardancy test.

The results are shown in Table 1.

### [Example 8]

A flame-retardant composition (8) was obtained by adding 59 g of the flame-retardant dispersion liquid (4) to 20 g of an acrylic resin emulsion (Acronal LR9014, solid content concentration: 45%, manufactured by BASF), and performing such adjustment that an aluminum hydroxide concentration after drying became 52 wt%. The prepared flame-retardant composition (8) was applied onto a polycarbonate plate having a thickness of 1.0 mm so as to have a thickness of 50 µm, and was dried at 23°C for 24 hours. Thus, a flame-retardant member (8A) having formed thereon a flame-retardant layer was obtained. The flame-retardant member (8A) was subjected to the measurement of a haze, the measurement of a coefficient of friction, and an abrasion test.

In addition, the flame-retardant composition (8) was applied to one surface of a polyester fiber having a basis weight of 300 g/m² so that its applied weight after drying became 100 g/m². Thus, a flame-retardant member (8B) for a flame retardancy test having formed thereon a flame-retardant layer was obtained. The flame-retardant member (8B) was subjected to a flame retardancy test.

The results are shown in Table 1.

### [Example 9]

A flame-retardant composition (9) was obtained by adding 96 g of the flame-retardant dispersion liquid (4) to 20 g of an acrylic resin emulsion (Acronal LR9014, solid content concentration: 45%, manufactured by BASF), and performing such adjustment that an aluminum hydroxide concentration after drying became 60 wt%. The prepared flame-retardant composition (9) was applied onto a polycarbonate plate having a thickness of 1.0 mm so as to have a thickness of 50 µm, and was dried at 23°C for 24 hours. Thus, a flame-retardant member (9A) having formed thereon a flame-retardant layer was obtained. The flame-retardant member (9A) was subjected to the measurement of a haze, the measurement of a coefficient of friction, and an abrasion test.

In addition, the flame-retardant composition (9) was applied to one surface of a polyester fiber having a basis weight of 300 g/m² so that its applied weight after drying became 100 g/m². Thus, a flame-retardant member (9B) for a flame retardancy test having formed thereon a flame-retardant layer was obtained. The flame-retardant member (9B) was subjected to a flame retardancy test.

The results are shown in Table 1.

### [Example 10]

A flame-retardant composition (10) was obtained by adding 14 g of the flame-retardant dispersion liquid (4) to 20 g of a urethane resin emulsion (Dispurez 201, solid content concentration: 34%, manufactured by Incorez Ltd.), and performing such adjustment that an aluminum hydroxide concentration after drying became 30 wt%. The prepared flame-retardant composition (10) was applied onto a polycarbonate plate having a thickness of 1.0 mm so as to have a thickness of 50 µm, and was dried at 23°C for 24 hours. Thus, a flame-retardant member (10A) having formed thereon a flame-retardant layer was obtained. The flame-retardant member (10A) was subjected to the measurement of a haze, the measurement of a coefficient of friction, and an abrasion test.

In addition, the flame-retardant composition (10) was applied to one surface of a polyester fiber having a basis weight of 300 g/m² so that its applied weight after drying became 100 g/m². Thus, a flame-retardant member (10B) for a flame retardancy test having formed thereon a flame-retardant layer was obtained. The flame-retardant member (10B) was subjected to a flame retardancy test.

The results are shown in Table 1.

### [Example 11]

A flame-retardant composition (11) was obtained by adding 44 g of the flame-retardant dispersion liquid (4) to 20 g of a urethane resin emulsion (Dispurez 201, solid content concentration: 34%, manufactured by Incorez Ltd.), and performing such adjustment that an aluminum hydroxide concentration after drying became 52 wt%. The prepared flame-retardant composition (11) was applied onto a polycarbonate plate having a thickness of 1.0 mm so as to have a thickness of 50 µm, and was dried at 23°C for 24 hours. Thus, a flame-retardant member (11A) having formed thereon a flame-retardant layer was obtained. The flame-retardant member (11A) was subjected to the measurement of a haze, the measurement of a coefficient of friction, and an abrasion test.

In addition, the flame-retardant composition (11) was applied to one surface of a polyester fiber having a basis weight of 300 g/m² so that its applied weight after drying became 100 g/m². Thus, a flame-retardant member (11B) for a flame retardancy test having formed thereon a flame-retardant layer was obtained. The flame-retardant member (11B) was subjected to a flame retardancy test.

The results are shown in Table 1.

### [Example 12]

A flame-retardant composition (12) was obtained by adding 73 g of the flame-retardant dispersion liquid (4) to 20 g of a urethane resin emulsion (Dispurez 201, solid content concentration: 34%, manufactured by Incorez Ltd.), and performing such adjustment that an aluminum hydroxide concentration after drying became 60 wt%. The prepared flame-retardant composition (12) was applied onto a polycarbonate plate having a thickness of 1.0 mm so as to have a thickness of 50 µm, and was dried at 23°C for 24 hours. Thus, a flame-retardant member (12A) having formed thereon a flame-retardant layer was obtained. The flame-retardant member (12A) was subjected to the measurement of a haze, the measurement of a coefficient of friction, and an abrasion test.

In addition, the flame-retardant composition (12) was applied to one surface of a polyester fiber having a basis weight of 300 g/m² so that its applied weight after drying became 100 g/m². Thus, a flame-retardant member (12B) for a flame retardancy test having formed thereon a flame-retardant layer was obtained. The flame-retardant member (12B) was subjected to a flame retardancy test.

The results are shown in Table 1.

### [Example 13]

A flame-retardant composition (13) was obtained by adding 45 g of the flame-retardant dispersion liquid (5) to 20 g of a urethane resin emulsion (Dispurez 201, solid content concentration: 34%, manufactured by Incorez Ltd.), and performing such adjustment that a magnesium hydroxide concentration after drying became 52 wt%. The prepared flame-retardant composition (13) was applied onto a polycarbonate plate having a thickness of 1.0 mm so as to have a thickness of 50 µm, and was dried at 23°C for 24 hours. Thus, a flame-retardant member (13A) having formed thereon a flame-retardant layer was obtained. The flame-retardant member (13A) was subjected to the measurement of a haze, the measurement of a coefficient of friction, and an abrasion test.

In addition, the flame-retardant composition (13) was applied to one surface of a polyester fiber having a basis weight of 300 g/m² so that its applied weight after drying became 100 g/m². Thus, a flame-retardant member (13B) for a flame retardancy test having formed thereon a flame-retardant layer was obtained. The flame-retardant member (13B) was subjected to a flame retardancy test.

The results are shown in Table 1.

### [Comparative Example 1]

A flame-retardant composition (C1) was obtained by adding 58 g of the flame-retardant dispersion liquid (1) to 20 g of an acrylic resin emulsion (Acronal DS6277, solid content concentration: 48%, manufactured by BASF), and performing such adjustment that an aluminum hydroxide concentration after drying became 52 wt%. The prepared flame-retardant composition (C1) was applied onto a polycarbonate plate having a thickness of 1.0 mm so as to have a thickness of 50 µm, and was dried at 23°C for 24 hours. Thus, a flame-retardantmember (C1A) havingformedthereonaflame-retardant layer was obtained. The flame-retardant member (C1A) was subjected to the measurement of a haze, the measurement of a coefficient of friction, and an abrasion test.

In addition, the flame-retardant composition (C1) was applied to one surface of a polyester fiber having a basis weight of 300 g/m² so that its applied weight after drying became 100 g/m². Thus, a flame-retardant member (C1B) for a flame retardancy test having formed thereon a flame-retardant layer was obtained. The flame-retardant member (C1B) was subjected to a flame retardancy test.

The results are shown in Table 1.

### [Comparative Example 2]

A flame-retardant composition (C2) was obtained by adding 7.5 g of the flame-retardant dispersion liquid (4) to 20 g of an acrylic resin emulsion (Acronal DS6277, solid content concentration: 48%, manufactured by BASF), and performing such adjustment that an aluminum hydroxide concentration after drying became 15 wt%. The prepared flame-retardant composition (C2) was applied onto a polycarbonate plate having a thickness of 1.0 mm so as to have a thickness of 50 µm, and was dried at 23°C for 24 hours. Thus, a flame-retardant member (C2A) having formed thereon a flame-retardant layer was obtained. The flame-retardant member (C2A) was subjected to the measurement of a haze, the measurement of a coefficient of friction, and an abrasion test.

In addition, the flame-retardant composition (C2) was applied to one surface of a polyester fiber having a basis weight of 300 g/m² so that its applied weight after drying became 100 g/m². Thus, a flame-retardant member (C2B) for a flame retardancy test having formed thereon a flame-retardant layer was obtained. The flame-retardant member (C2B) was subjected to a flame retardancy test.

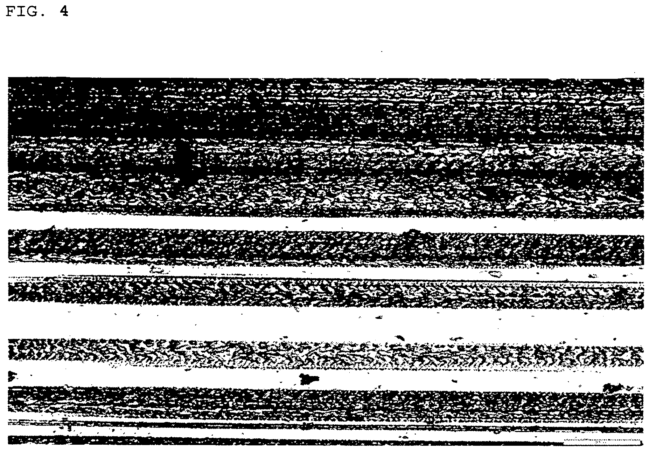

The results are shown in Table 1. In addition, a black-and-white binarized image of the results of the abrasion test is shown in FIG. 4.

### [Comparative Example 3]

A flame-retardant composition (C3) was obtained by adding 265 g of the flame-retardant dispersion liquid (4) to 20 g of an acrylic resin emulsion (Acronal DS6277, solid content concentration: 48%, manufactured by BASF), and performing such adjustment that an aluminum hydroxide concentration after drying became 70 wt%. The prepared flame-retardant composition (C3) was applied onto a polycarbonate plate having a thickness of 1.0 mm so as to have a thickness of 50 µm, and was dried at 23°C for 24 hours. However, the film of the formed flame-retardant layer was brittle and hence a flame-retardant member having formed thereon the flame-retardant layer could not be obtained.

In addition, the flame-retardant composition (C3) was applied to one surface of a polyester fiber having a basis weight of 300 g/m² so that its applied weight after drying became 100 g/m². However, the film of the formed flame-retardant layer was brittle and hence a flame-retardant member having formed thereon the flame-retardant layer could not be obtained.

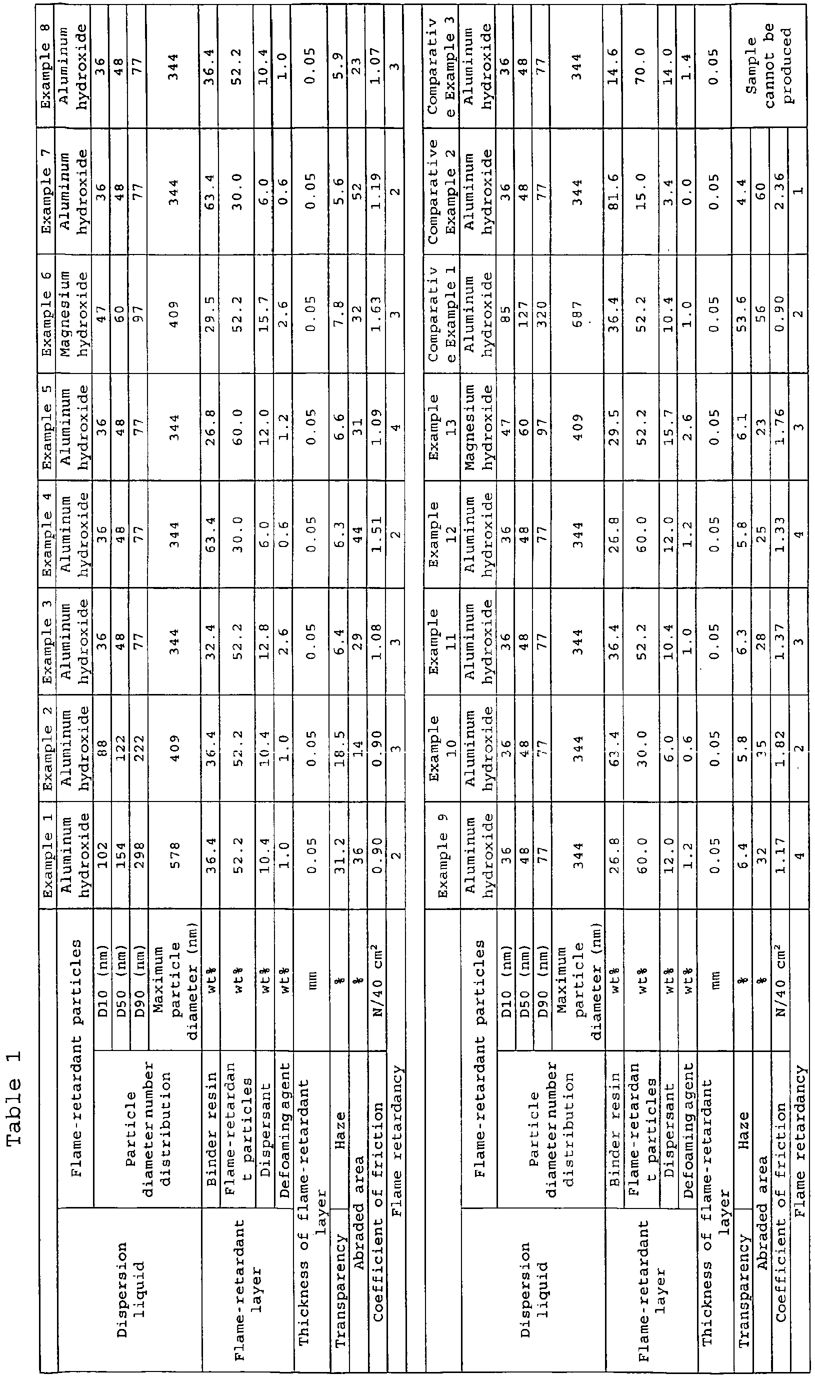

The present invention can be utilized for imparting flame retardancy to, for example, a base material in which emphasis is placed on a design property (e.g., a leather, a woven fabric, a nonwoven fabric, a wood panel, or a plastic).

## Claims

1. A flame-retardant member, comprising:
a flame-retardant layer; and
a base material,
wherein:
the flame-retardant layer has a haze of 35% or less; and
a surface of the flame-retardant layer on a side opposite to the base material has a coefficient of friction measured in conformity with JIS-K-7125:1999 of 2.00 N/40 cm² or less.

2. The flame-retardant member according to claim 1, wherein the flame-retardant layer contains 20 wt% to 65 wt% of flame-retardant particles having a particle diameter D90 of 500 nm or less with respect to 100 wt% of all constituent components of the flame-retardant layer.

3. The flame-retardant member according to claim 2, wherein the flame-retardant particles have a particle diameter D50 of 200 nm or less.

4. The flame-retardant member according to claim 2 or 3, wherein the flame-retardant particles have a particle diameter D10 of 110 nm or less.

5. The flame-retardant member according to any one of claims 2 to 4, wherein the flame-retardant particles each comprise a metal hydroxide.

6. The flame-retardant member according to claim 5, wherein the metal hydroxide comprises at least one kind selected from aluminum hydroxide and magnesium hydroxide.

7. The flame-retardant member according to any one of claims 1 to 6, wherein the flame-retardant layer contains a binder resin.

8. The flame-retardant member according to any one of claims 1 to 7, wherein the flame-retardant layer has a thickness of from 10 µm to 500 µm.

9. The flame-retardant member according to any one of claims 1 to 8, wherein the base material comprises at least one kind selected from a leather, a woven fabric, a nonwoven fabric, a wood panel, and a plastic.

10. A flame-retardant composition, which forms the flame-retardant layer of the flame-retardant member of any one of claims 1 to 9.

11. The flame-retardant composition according to claim 10 , wherein the flame-retardant composition comprises a resin dispersion liquid including flame-retardant particles, a binder resin, and an aqueous liquid.

12. A flame-retardant dispersion liquid to be used in preparation of the flame-retardant composition of claim 10 or 11, comprising:
flame-retardant particles; and
an aqueous liquid.

13. The flame-retardant dispersion liquid according to claim 12, wherein the flame-retardant particles comprise flame-retardant particles pulverized with a pulverizer.
